# EUROPEAN PATENT APPLICATION

(11) **EP 0 982 922 A1**
(43) Date of publication of application: **01.03.2000**
(21) Application number: 99115113.5
(22) Date of filing: 09.08.1999
(51) Int. Cl.: H04M 11/06

(54) **Shared voice and data link**

(30) Priority: 21.08.1998 AU PP541298
(71) Applicant: ALCATEL, 75008 Paris (FR)
(72) Inventor: Johan, Ron, Bondi Junction, New South Wales (AU)
(74) Representative: Dreiss, Fuhlendorf, Steimle & Becker, Patentanwälte

(57) **Abstract**

This arrangement provides a simplified technique for using a subscriber's telephone for both telephone messages (voice) and data messages such as e-mail by maintaining the data link open while the phone is idle. The phone (1) and data terminal e.g. PC (2), are connected to the line (4) via a subscriber interface (3) which can distinguish between incoming voice and data messages and route them to the phone (1) or terminal (2). At the access point to the network e.g. exchange (6), network interface (5) distinguishes voice and data and routes them to the PSTN (7) or data network (10).

## Description

### Technical Field

This invention relates to an arrangement for making efficient use of a customer's telephone line for both telephone and data traffic. This invention will be described in the context of the use of the telephone line for telephone traffic and Internet traffic, e.g., e-mail or "data push" traffic.

### Background Art

Present arrangements for sharing a single line for telephone service and data traffic do not provide a satisfactory means of dealing with a clash of requirements due to the collision of signals from different sources.

### Disclosure of the Invention

This invention discloses means for detecting conflicting use demands on a line, and an arrangement for managing conflicting demands.

Accordingly to this specification describes interface means connecting one of at least first and second sources/destinations of communication to a line, the interface means including
- first detection control means monitoring the status of the line and at least one of the sources/destinations;
- path establishment means controlled by the detection and control means;
- the interface means including decision means to connect one of the sources/destination of communication signals to the line on the basis of the status information and a predetermined set of priority rules.

This specification also describes a voice/data communication arrangement including a first interface means (described above) for interfacing either a PSTN or a data network to the line, and a second interface means for interfacing telephone communication apparatus or a data terminal to the line.

Preferably, the interface means includes detection and control means to detect the status information of the line and the sources/destinations, the detection and control means operating communication path establishment means to connect the selected source/destination to the line.

### Brief Description of the Drawings

- Figure 1: is a block schematic diagram illustrating an arrangement embodying the invention; and
- Figure 2: exemplifies details of the interface means of Figure 1.

### Best mode of carrying out the invention

The invention will be described with reference to the accompanying drawings.

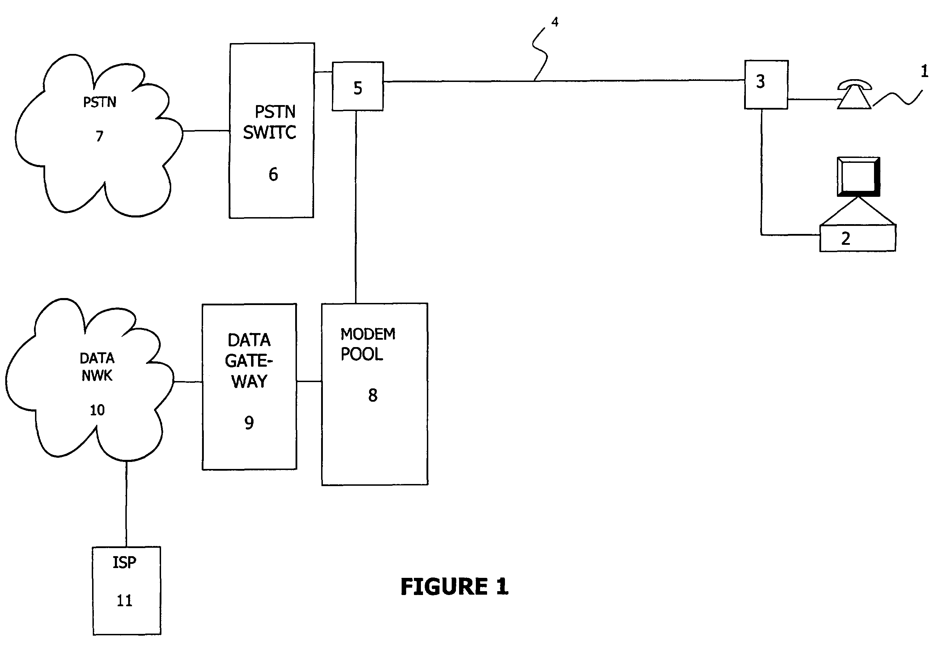

Figure 1 shows an arrangement embodying the invention in which a telephone subset 1 and a data terminal such as computer 2 are connected to the subscriber's telephone line 4 via a modem 3. At the point of access to the carrier's network, the line 4 is connected to a smart line interface circuit 5, which provides access to the PSTN 7 via e.g., a remote access node or local exchange 6. In addition the line interface circuit 5 also can establish communication with a data network 10 via, e.g., a modem pool 8 and a data gateway 9. This enables data communication to be established between the subscriber's data terminal 2 and another terminal connected to the data network. In particular the data terminal 2 may communicate with an internet service provider 11 with which the subscriber is registered.

The smart line interface circuit 5 is able to recognize the different types of traffic arriving via line 4, so as to know whether to connect to the PSTN 7 or the data network 10.

The interface circuit monitors the connections to the PSTN and the data network to determine whether voice or data traffic is to be sent to the subscriber.

The modem 3 also recognises whether the traffic arriving on line 4 is voice or data and routes the traffic to the telephone subset 1 or the terminal 2 as appropriate.

The operation of the system embodying the invention will be described by reference to the various combinations of voice and data traffic arriving at and originating from the subscriber.

The operation of the system where only one function is being implemented relies on the ability of the line interface circuit 5 to distinguish between voice and data message transmissions from the subscriber (outgoing) and on the ability of the modem 3 to separate incoming voice and data messages.

In a preferred embodiment, when the subscriber originates a transmission, the modem 3 notifies the line interface 5 of the nature of message, voice or data, by the use of a signalling protocol.

The line circuit includes means to discriminate between the types of traffic received over line 4. In the case of voice traffic it establishes a voice connection to the PSTN switch 6 and the call proceeds as a normal phone call. For example, the line circuit recognizes when the subscriber initiates a telephone call by the looping of the DC line path. Alternatively, when the subscriber initiates a data communication, the line circuit detects the start of a data session, e.g. by detection of a signalling protocol.

In the case of data, the message is routed through modem pool 8 to the data gateway 9 and via the data network to e.g., the ISP 11.

Instances of competition between voice and data calls are described with reference to the following table.

**TABLE 1**

| | Voice | Voice | Data | Data |
|---|---|---|---|---|
| Voice In | A1 | B1 | C1 | D1 |
| Voice Out | A2 | B2 | C2 | D2 |
| Data In | A3 | B3 | C3 | D3 |
| Data Out | A4 | B4 | C4 | D4 |

- A1 =: Not permitted i.e. only 1 incoming voice call can be established. The exchange sends a busy tone to the second incoming voice call.
- A2 =: Not permitted. The subscriber cannot establish an outgoing call while an incoming call is ringing or in progress, assuming no Hold, Conference, etc features are used.
- A3 =: Not permitted. When a voice call is in progress an incoming data message cannot be established. If the incoming data traffic is e-mail, the TCP/IP protocols will return the message to the sender advising that it was not delivered.
- A4 =: Not permitted. A subscriber cannot initiate a data session while receiving a phone call.

In an alternative embodiment, incoming e-mail messages are cached at a convenient point, e.g., the ISP 11, data gateway 9, or line interface 5 and forwarded when the voice message terminates.
- B1 =: Not permitted. An incoming voice call cannot be established while an outgoing voice call is in progress, assuming that there is no HOLD, etc, facility provided via exchange 6.
- B2 =: Not permitted. A second outgoing voice call cannot be established, assuming the exchange 6 does not provide CONFERENCE type facilities.
- B3 =: Not permitted: see A3.
- B4 =: Not permitted. A data message cannot be sent while a voice call is in progress. An outgoing e-mail message is stored in terminal 2 until the line 4 is free.
- C1 =: An incoming voice message overrides an ongoing incoming data message. The ongoing data message is interrupted. The TCP/IP causes the "return to sender" message to be sent to the sender.

In the alternative embodiment, where the ISP 11 or line interface 5 proxies for the subscriber's terminal, the message may be cached at the ISP 11 or line interface 5 and retransmitted when the line 4 is free.
- C2 =: An outgoing voice message overrides an ongoing incoming data message. see C1.

In an alternative the subscriber is given the option of interrupting the incoming data message or of deferring the phone call until the line is free.
- C3 =: A second incoming data message is queued, e.g., at ISP 11, until the line is free.
- C4 =: An outgoing data message is stored in terminal 2 while an incoming data message is in progress.
- D1 =: An incoming voice message overrides an outgoing data message. The terminal 2 will retransmit the data message when the line 4 becomes available.
- D2 =: An outgoing voice message overrides an outgoing data message. The terminal 2 will retransmit the data message when the line 4 becomes available.

In an alternative the telephone user is given the option to interrupt the outgoing message or to wait until the line 4 becomes available.
- D3 =: In incoming data message is cached, e.g. at ISP 11, until the line is available when an outgoing data message is in progress according to the TCP/IP protocol.
- D4 =: Second and further outgoing e-mails are queued in terminal 2 for transmission.

The functionality to perform these routines is provided by a combination of features in the data message software application in terminal 2 and the line interface circuit 5. In addition embodiments of the invention utilize the internet Messaging protocols and in come functions, enhancements to the functionality of modem 3.

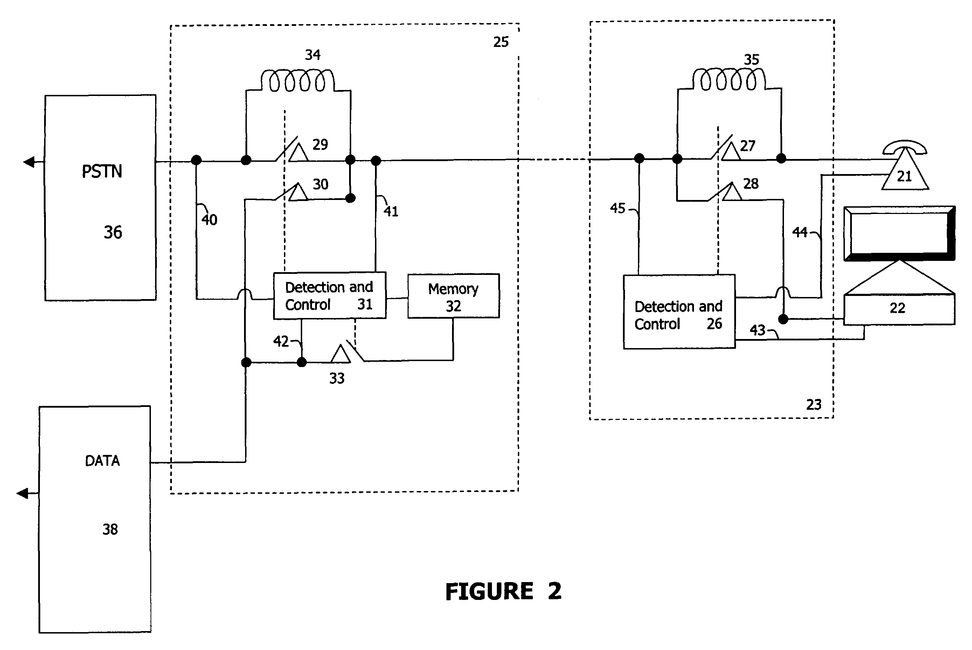

Figure 2 is a schematic diagram illustrative of the functionality of an arrangement embodying the invention. In Figure 2, at the network end of line 4, line interface 25 includes detection and control means 31 responsive to inputs (40, 41, 42) from the PSTN 36, line 4, and data network 38, to identify the nature of traffic to be sent. Detection and control means 31 is operatively connected to communication path establishment means illustrated as a change-over switch incorporating mechanical switches 28 and 30 to establish a connection between line 4 and either PSTN 36 or data network 38. Preferably switch 30 connecting line 4 and data network 38 is normally closed to enable establishment of data traffic to or from the subscriber.

DC feed/VF choke 34 is illustrated bridging switch 29 as a means of supplying DC feed to line 4 when switch 29 is open.

At the subscriber end of line 4, an additional interface circuit 23 is used to determine the nature of the traffic to be sent. A second detection and control means 26 monitors the status of data terminal 22, telephone subset 21, and line 4 via input links 43, 44 and 45 respectively.

Detection and control means 26 controls the change-over arrangement illustrated as mechanical switches 27 and 28.

Preferably switch 27 is normally closed to facilitate the establishment of telephone traffic.

The interface circuit may be a stand alone circuit, for example where the data terminal (PC 22) has an inbuilt modem, or it may be incorporated into a modem.

The detection and control means 31 can detect the initiation of a telephone call from the subscriber from the looping of the line when the subscriber goes off-hook. A telephone call to be transmitted to the subscriber is preferably detected, e.g., by detecting the ring signal control signal in the line circuit, i.e. by detecting the signal which causes the ring signal to be applied to the line. Alternatively, the ring signal itself may be detected.

The sending of a data message towards terminal 22 is detected via input link 42, e.g., by detecting a set-up protocol or modem training sequence.

Detection and control means 26 similarly monitors the line condition via link 45, the status of telephone subset 21 to determine whether it is in an on-hook or off-hook condition, and terminal 22 to determine whether it is active or idle.

The first and second detection and control means 31 and 26, are programmed to implement the operations described with reference to TABLE 1.

Accordingly, so long as there is a voice call being set up or in progress, the detection ad control means inhibit the establishment of a data session (see A1-A4; B1-B4). Thus as long as the detection and control means 31 and 26 detect the presence of voice traffic, they inhibit the application of data traffic to line 4.

However the operation of the detection control means 31 and 26 is more active when there is no voice traffic on line 4 and data is to be sent to or transmitted by terminal 22.

In these circumstances, when terminal 22 initiates a data session, detection and control means 26 detects the signal protocol and causes change-over means 27/28 to disconnect the subset 21 and to connect terminal 22 to line 4. Detection and control means 31 then detects the data signalling protocol and switches line 4 form the PSTN 36 to data network 38 using change-over means 29/30, so that terminal 22 is connected to data network 38 via switches 28 and 30.

Similarly, when a data message is to be sent to terminal 22 from data network 38, detection and control means 31 detects the data protocol via link 42 and operates change-over means 29/30. Detection and control means 26 then receives the data protocol from line 4 via link 45 and operates change-over means 27/28 to connect terminal 22 to line 4, establishing a path to data network 38.

Preferably, the detection and control means 31 and 26 include programmable processing capability to implement the functionality of TABLE 1. The functionality of TABLE 1 has been chosen to give priority to voice traffic. The priority for voice traffic may be automatic or optional as described in the alternative with reference to TABLE 1.

In the circumstances of C1 an incoming message overrides an incoming data message.

The detection and control means 31 detects the ring initiation signal, and operates the change-over means 29/30 to disconnect the data network from the line 4 and to connect the line 4 to the PSTN 36. This interrupts the data message and the normal data protocol (e.g. TCP/IP) indicates that the data transmission has been interrupted. The sender must then retransmit the data message.

In the alternative, the ISP 11 or the interface 5 (25) may be programmed to proxy for the subscriber. In the embodiment of Figure 2, interface 25 is programmed to proxy for terminal 22 and the message is stored in memory 32 under control of detection and control means 31 until the line 4 is available.

In C2 an outgoing voice message overrides an ongoing incoming data message. This is an important feature which allows for the contingency of the subscriber needing to make an emergency phone call, as well as enabling the subscriber to use the phone at any time.

In this case, when the subscriber places the telephone subset in the off-hook condition, this is detected by detection and control means 26 which operates change-over means 27/28 to disconnect the terminal 22 and to connect subset 21 to line 4.

Detection and control means 31 also registers the looping of the line and operates change-over means 29/30, interrupting the data message, which is reported according to the data protocol.

In an alternative, when the subscriber puts subset 21 in an off-hook condition, detection and control means 26 may send a signal to the subscriber via subset 21 to notify the subscriber that there is a data session in progress and give the subscriber the option to hang up or to continue, e.g. by pressing a designated button. The signal may be a Recorded Voice Announcement (RVA) or other acoustic and/or display message to be displayed on a screen on the subset.

For cases C3 and C4 and D3 and D4 the queuing of messages is managed by the data system protocols.

For D1, in which an incoming voice message overrides an outgoing data message, detection and control means 31 detects the ring signal or ring initiation signal and operates change-over means 29/39 to place it in PSTN mode.

Detection and control means 26 detects the ring voltage or the terminal of the data message and operates change-over means 27/28 to connect subset 21 to the line. The data protocol in terminal 22 ensure the interruption is noted and the message stored for retransmission when line 4 is available.

For D2, in which an outgoing voice call overrides an outgoing data message, detection and control means 26 detects when subset 21 is placed in the off-hook condition and operates change-over means 27/28 to connect subset 21 to the line and to disconnect terminal 22.

Detection and control means 26 detects the looping of line 4 and places change-over means 29/30 into PSTN mode.

In an alternative method, the subscriber is given the option of overriding the data session, as in case C2.

While TABLE 1 is designed to give priority to voice traffic, it is clear that the person skilled in the art could select different priorities without departing from the spirit of the invention.

It should be understood that, while the telephone subset 21 and communication apparatus 22, are shown as discrete items, it is possible for their functionality to incorporated into a single piece of apparatus.

In a simplified embodiment, the communication path establishment means 27/28, 29/30, in the default condition when there is no telephone or data traffic connect the line 4 to the data terminal 22 and the data network 38.

In this arrangement, in the case where priority is given to telephone traffic to override data traffic, the detection and control means do not need to monitor the terminal 22 and the data network 38 because, when the phone call is in progress, the TCP/IP protocol recognizes when there is no data terminal connected and notifies the sender, and when there is no phone call in progress, the default setting enables the setting up of a data link between network 38 and terminal 22.

However, where the option to give the subscriber the choice to override a data session, the detection and control means utilizes the monitoring function via link 43 to determine when a data session is in progress and sends an appropriate signal to the subset 21 (RVA, LCD display, modified dialtone) to alert the subscriber that a data session is in progress.

The inventive concept is applicable to two or more terminals. By using the default to the unmonitored terminal, one less monitor means is required than there terminals if the unmonitored terminal can be overridden by the other terminals.

## Claims

1. Interface means for connecting one of two or more sources/destinations of communication traffic to a line, the interface means including:
- first detection and control means monitoring the status of the line and at least one of the sources/destinations;
- communication path establishment means controlled by the detection and control means to establish a communication path between the line and one of the sources/destinations;
- the detection and control means including decision means to control the communication path establishment means on the basis of the status of the line and the source/destinations which it monitors, in accordance with a predetermined set of priority rules.

2. Network interface means for interfacing a line to at least a first network and a second network, the interface means including:
- first network interface detector means to detect the status of a link between the first network and the interface means;
- second network interface detector means to detect the status of the line;
- network end communication path establishment means to establish a communication path between the line and either the first or second network;
- first decision means to control the network end communication path establishment means in response to the first and second network interface detector means and a predetermined first set of priority rules.

3. Network interface means as claimed in claim 2 wherein, in the absence of traffic to or from the first network, the first decision means causes the network end communication path establishment means to establish a communication path between the second network and the line.

4. Network interface means as claimed in claim 2 or claim 3 wherein, the priority rules give priority to traffic to or from the first network.

5. Network interface means as claimed in any one of claims 2 to 4 wherein the first network is a telephone network and the second network is a data network,
and wherein the first network interface detection means detects the initiation of a telephone call to the line via the telephone network;
- the second network interface detector means detects the initiation of a telephone call from the remote end of the line; and
wherein the first decision means causes the network and communication path establishment means to establish a communication path between the line and the first network when either the first or second network interface detection means detects the initiation of a telephone call.

6. Network interface means as claimed in any one of claims 2 to 5 including third network interface detector means to monitor the status of the second network, the first decision means being additionally responsive to the third network detector means.

7. Network interface means as claimed in any one claims 2 to 6 wherein the second network uses the TCP/IP protocol.

8. Network interface means substantially as herein described with reference to the accompanying drawings.

9. Subscriber interface means for interfacing a line to at least first and second subscriber apparatus, the subscriber interface means including:
- first subscriber interface detector means to detect the status of the first subscriber apparatus;
- second subscriber interface detector means to detect the status of the line;
- subscriber end communication path establishment means to establish a communication path between the line and either the first or second subscriber apparatus;
- second decision means to control the subscriber end communication path establishment means in response to the first and second subscriber end detector means and a predetermined second set of priority rules.

10. Subscriber interface means as claimed in claim 9, wherein, in the absence of traffic to or from the first subscriber apparatus, the second decision means causes the subscriber end communication path establishment means to establish a communication path between the line and the second subscriber apparatus.

11. Subscriber interface means as claimed in claim 9 or claim 10, wherein the priority rules give priority to traffic to or from the first subscriber apparatus.

12. Subscriber interface means as claimed in claim 11, wherein the priority rules give the subscriber the option of overriding traffic to or from the second subscriber apparatus with traffic from the first subscriber apparatus.

13. Subscriber interface means as claimed in claim 12, wherein the detection and control means sends a signal to the first subscriber apparatus when a traffic session using the second subscriber apparatus is in progress and the subscriber attempts to activate the first subscriber apparatus.

14. Subscriber interface means as claimed in any one of claims 9 to 13, wherein the first subscriber apparatus include a telephone circuit, and the second subscriber apparatus includes a data terminal;
and wherein the second decision means causes the subscriber end communication path establishment means to establish a communications path between the telephone circuit and the line when either the first or second subscriber interface detection means detects the initiation of a telephone call.

15. Subscriber interface means substantially as herein described with reference to the accompanying drawings.

16. An arrangement enabling the selective connection of a line to one of two or more networks and one of two or more subscriber terminals, the arrangement including network interface means as claimed in any one of claims 1 to 8 and subscriber interface means as claimed in any one of claims 9 to 15.

17. An arrangement enabling the selective connector of a line to one of two or more networks and one of two or more terminals, substantially as herein described with reference to the accompanying drawings.
